(19) **Europäisches Patentamt / European Patent Office / Office européen des brevets**

(11) **EP 2 115 885 B1**

(12) **FASCICULE DE BREVET EUROPEEN**

(45) Date de publication et mention
de la délivrance du brevet:
**07.11.2012 Bulletin 2012/45**

(21) Numéro de dépôt: **07858034.7**

(22) Date de dépôt: **21.12.2007**

(51) Int Cl.:
**H04B 5/02** *(2006.01)*　　　**H04B 7/005** *(2006.01)*

(86) Numéro de dépôt international:
**PCT/EP2007/064418**

(87) Numéro de publication internationale:
**WO 2008/077919 (03.07.2008 Gazette 2008/27)**

(54) **DISPOSITIF D'EMISSION-RECEPTION DE SIGNAUX**

SIGNALÜBERTRAGUNGS- UND EMPFANGSVORRICHTUNG

SIGNAL TRANSMISSION/RECEPTION DEVICE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **22.12.2006 FR 0611323**

(43) Date de publication de la demande:
**11.11.2009 Bulletin 2009/46**

(73) Titulaire: **Valeo Sécurité Habitacle
94046 Créteil Cedex (FR)**

(72) Inventeurs:
• **LECONTE, ERIC
F-94042 Creteil (FR)**
• **VIOLLEAU, STEPHANE
F-94042 Creteil (FR)**
• **NOTARIANNI, MICHAEL
F-94042 Creteil (FR)**

(74) Mandataire: **Jacquot, Ludovic R. G. et al
Valeo Sécurité Habitacle
Service Propriété Industrielle
76 Rue Auguste Perret
ZI Europarc
94046 Créteil Cedex (FR)**

(56) Documents cités:
WO-A-00/44077　　　WO-A-03/055005
GB-A- 2 415 785　　　US-A1- 2004 090 234
US-B1- 6 208 249

## Description

### Domaine de l'invention

La présente invention concerne un dispositif d'émission-réception de signaux apte à coopérer avec un dispositif d'antenne(s) apte à émettre ce champ magnétique et un procédé de mise en oeuvre par le dispositif d'émission-réception.

Elle trouve une application particulière pour un véhicule automobile équipé d'un système de détection mains libres.

### Etat de la technique

Selon un état de la technique connu, il existe un dispositif d'émission-réception de signaux utilisé dans un système mains libres pour une application véhicule. Un système mains libres permet d'accéder à un véhicule et de le démarrer au moyen d'un récepteur-émetteur sans avoir recours à une clef mécanique. Le dispositif d'antennes communique avec un badge qui fait office de récepteur-émetteur afin de détecter s'il se situe à proximité du véhicule, et s'il se trouve à l'intérieur ou à l'extérieur de l'habitacle du véhicule.

Si le badge se situe à proximité, le véhicule est déverrouillé lorsque l'utilisateur du véhicule touche une poignée de porte par exemple. Si le badge est à l'intérieur du véhicule, l'utilisateur est autorisé à démarrer le véhicule.

La communication entre le dispositif d'antennes et le badge s'effectue grâce à des signaux basse fréquence émis du dispositif d'antennes vers le badge et grâce à des signaux radiofréquence émis du badge vers le dispositif d'émission-réception. Les signaux basse fréquence sont envoyés avec une puissance émise donnée correspondant à un champ magnétique émis, le badge recevant un champ magnétique correspondant dont la puissance reçue est relative à la puissance émise.

Un inconvénient de cet état de la technique est que la puissance émise n'est pas mesurée précisément ce qui peut engendrer des problèmes de réception entre le dispositif d'antenne et le badge et par conséquent un problème de détection du badge par le dispositif d'antennes.

### Objet de l'invention

L'invention a donc pour but une mesure précise de la puissance émise par le dispositif d'antenne(s) de manière à établir une réception fiable entre le dispositif d'antenne(s) et un objet d'identification.

Elle propose donc selon un premier objet un dispositif d'émission-réception de signaux apte à coopérer avec un dispositif d'antenne(s) apte à émettre un champ magnétique, caractérisé en ce qu'il comporte pour l'émission :

- un étage de puissance pour envoyer un signal tension carré symétrique en entrée du dispositif d'antenne(s) pour lui fournir un courant permettant de générer le champ magnétique émis, et
- un étage de mesure de courant pour mesurer le courant circulant dans le dispositif d'antenne(s).

Ainsi, comme on le verra en détail plus loin, le signal tension carré symétrique va permettre de réduire le nombre d'harmoniques dans le courant mesuré dans le dispositif d'antenne(s) et va permettre d'obtenir ainsi une détermination du champ magnétique émis et donc de la puissance émise correspondant au champ magnétique reçu par l'objet d'identification plus précise sans avoir de courants parasites.

Selon des modes de réalisation non limitatifs, le dispositif selon l'invention présente les caractéristiques supplémentaires suivantes.

Dans un mode de réalisation non limitatif, le signal tension comporte un rapport cyclique de 1/3. Cela permet de supprimer les harmoniques de rang multiples de 3 dans le signal courant mesuré et d'obtenir ainsi une mesure plus précise du courant.

Dans un mode de réalisation non limitatif, l'étage de puissance est avec commande à pont complet. C'est un moyen simple de fournir la tension symétrique.

Dans un mode de réalisation non limitatif, l'étage de mesure est un détecteur crête. C'est un moyen simple de mesure du courant.

Dans un mode de réalisation non limitatif, le dispositif d'antenne(s) est un circuit RLC. Ce dernier permet à partir de la tension d'alimentation du dispositif d'antennes d'amplifier directement le courant du dispositif d'antennes pour permettre une émission de champ magnétique approprié sans utiliser d'asservissement en tension.

Selon un deuxième objet de l'invention, l'invention propose un système d'émission-réception de signaux comprenant un dispositif d'antenne(s) et un dispositif d'émission-réception selon l'une quelconque des caractéristiques précédentes, ce dernier étant apte à coopérer avec le dispositif d'antenne(s).

Selon un mode de réalisation on limitatif, le dispositif d'antenne(s) est un circuit RLC.

Selon un troisième objet, l'invention propose un procédé d'émission-réception de signaux en direction d'un dispositif d'antenne(s), caractérisé en ce qu'il comporte les étapes de :

- envoyer un signal tension carré symétrique en entrée du dispositif d'antenne(s) pour lui fournir un courant permettant de générer le champ magnétique émis, et
- mesurer le courant circulant dans le dispositif d'antenne(s).

Selon un quatrième objet de l'invention, l'invention propose un véhicule automobile caractérisé en ce qu'il comporte un dispositif d'émission-réception selon l'une quelconque des caractéristiques précédentes et apte à coopérer avec un dispositif d'antenne(s).

**Brève description des figures**

D'autres caractéristiques et avantages de la présente invention seront mieux compris à l'aide de la description en regard des dessins, donnés à titre d'exemples non limitatifs, parmi lesquels :

- la Figure 1 est une vue de dessus d'un véhicule muni d'un système mains libres comprenant un dispositif d'émission-réception selon un mode de réalisation non limitatif de l'invention;

- la Figure 2 est un diagramme représentatif d'une réception d'un objet d'identification coopérant avec le dispositif d'émission-réception selon un mode de réalisation non limitatif de l'invention;

- la Figure 3 représente un spectre de fréquence d'un courant circulant dans un dispositif d'antennes du dispositif d'émission-réception selon un mode de réalisation non limitatif de l'invention;

- la Figure 4 est un mode de réalisation non limitatif d'un dispositif d'émission-réception selon l'invention;

- la Figure 5 est un mode de réalisation non limitatif d'un étage de puissance compris dans le dispositif d'émission-réception de la Figure 4;

- la Figure 6 représente un premier mode de réalisation d'un signal tension appliqué au dispositif d'antennes du dispositif d'émission-réception de la Figure 4;

- la Figure 7 représente un deuxième mode de réalisation d'un signal tension appliqué au dispositif d'antennes du dispositif d'émission-réception de la Figure 4;

- la Figure 8 représente un champ magnétique dans l'espace dont une composante correspond à un champ magnétique émis par le dispositif d'émission-réception selon un mode de réalisation non limitatif de l'invention; et

- la Figure 9 est un procédé d'émission-réception mis en oeuvre par le dispositif d'émission-réception selon un mode de réalisation non limitatif de l'invention.

**Description détaillée de modes de réalisation non limitatifs de l'invention**

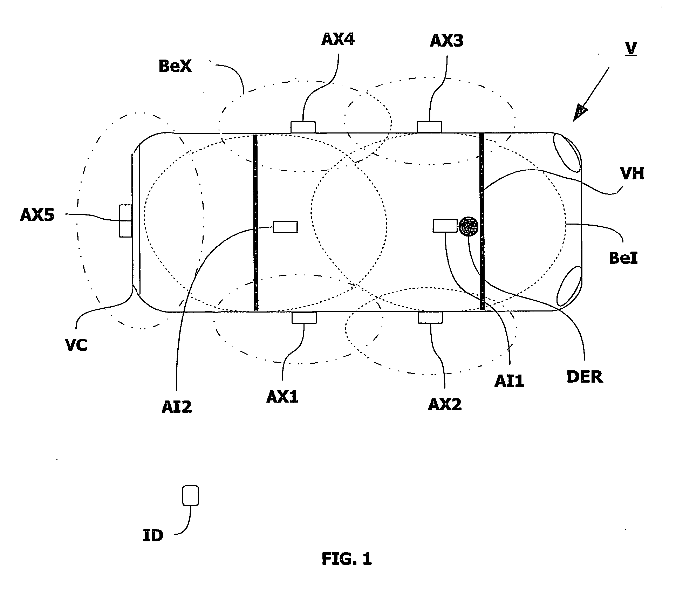

Sur la Figure 1, est représenté un véhicule V muni d'un dispositif d'émission-réception de signaux comportant :

- un dispositif d'émission-réception DER permettant de contrôler un dispositif d'antennes A et
- le dispositif d'antennes A comprenant, dans un exemple non limitatif une pluralité d'antennes, des antennes dites extérieures AX et des antennes dites intérieures AI, toutes des antennes coopérant avec un récepteur-émetteur ID, le tout formant un système d'émission-réception.

Dans l'exemple non limitatif de la Figure 1, sont représentées cinq antennes dites extérieures AX dont quatre sont situées à l'extérieur de l'habitacle VH du véhicule V, ici sur les poignées des portières, et une AX5 dans le pare-choc arrière VC du véhicule. Par ailleurs deux antennes dites intérieures AI1, AI2 sont situées dans l'habitacle VH, ici à l'avant et à l'arrière du véhicule. Chaque antenne est alimentée en courant alternatif I basse fréquence par le dispositif d'émission-réception DER et émet un champ magnétique, nommé Bel pour les antennes intérieures et BeX pour les antennes extérieures.
Au moyen de leur champ magnétique émis Be respectif, les antennes extérieures AX permettent de détecter si un récepteur-émetteur ID récepteur-émetteur se situe à proximité du véhicule V, dans un exemple non limitatif à une distance inférieure à 1,5 m, tandis que les antennes intérieures AI permettent de détecter si le récepteur-émetteur ID est dans l'habitacle VH du véhicule. Le récepteur-émetteur ID, dans cette application, est un objet d'identification ID porté par un utilisateur du véhicule V, par exemple un badge, une clef, un porte clef appelé en anglais «keyfob» etc. L'exemple du badge d'identification sera pris comme exemple dans la suite de la description. Au moyen du courant alternatif I, les antennes A communiquent avec le badge ID par transmission de données en émettant un signal basse fréquence BF et le badge ID répond en émettant un signal radiofréquence RF. Dans un exemple non limitatif, le signal basse fréquence BF se situe aux alentours de 125kHz et le signal radiofréquence RF se situe aux alentours de 433 MHz. On peut redescendre à 20kHz pour le signal basse fréquence BF ou aller jusqu'au GigaHz pour le signal radiofréquence RF en fonction des bandes de fréquences disponibles pour différents pays (315MHz pour l'Asie, 868Mhz pour certains pays d'Europe ou 915Mhz en Amérique etc.).

En fonction de la réponse, les antennes A déterminent si le badge ID est autorisé à ouvrir les portières du véhicule, ou s'il est autorisé à démarrer le véhicule. On notera que dans un exemple non limitatif, pour que le badge ID soit autorisé à ouvrir les portières, l'utilisateur doit par exemple toucher une poignée de porte. A cet effet, les poignées comprennent des détecteurs appropriés.

Les antennes extérieures AX permettent de déterminer une première zone de communication avec le badge ID pour autoriser un accès véhicule. Cette zone est définie par le champ magnétique émis par lesdites antennes AX. Les antennes extérieures AX doivent donc garantir au moins une distance minimale à partir de laquelle le badge ID est autorisé à accéder au véhicule. Les antennes intérieures AI permettent de déterminer une deuxième zone ZO de communication avec le badge ID pour autoriser un démarrage. Cette zone est définie par le champ magnétique émis par lesdites antennes AI. Les antennes intérieures AI doivent donc garantir une zone à partir de laquelle le badge ID est autorisé à démarrer le véhicule, cette zone correspondant dans l'exemple pris à l'habitacle VH du véhicule V. On notera que cette zone ZO varie en fonction des variations du champ magnétique émis Be, ces variations étant dues notamment aux perturbations environnantes telles que des variations de températures, des variations de tension batterie du véhicule etc. qui influent sur les composants du dispositif d'antennes.

On notera que en pratique, le champ magnétique émis par ces antennes intérieures AI a une couverture plus grande que l'habitacle VH mais est limité par la carcasse métallique de l'habitacle VH du véhicule V et déborde par les ouvertures des fenêtres.

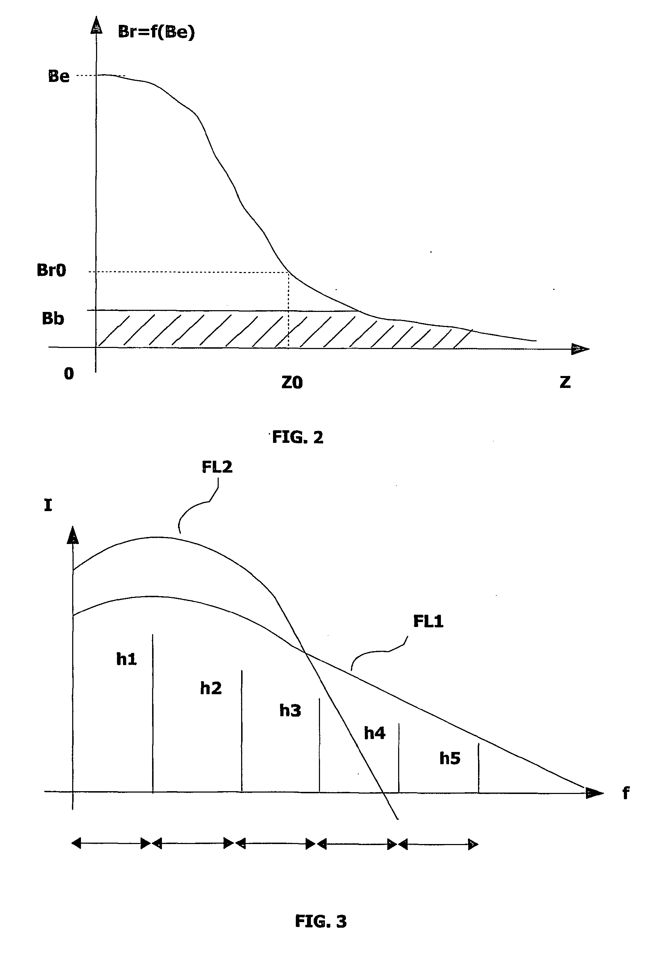

La Figure 2 illustre la position du badge ID par rapport à une antenne A, ici intérieure AI, du dispositif d'antennes en fonction du champ magnétique Be de cette antenne A. Elle illustre donc l'évolution du champ magnétique Br reçu correspondant.

On peut voir que plus le badge ID se situe loin d'une antenne A émettant un champ magnétique émis Be, plus le champ magnétique reçu Br correspondant est faible. Lorsque le badge ID se trouve au même endroit que l'antenne A, le champ magnétique reçu Br est théoriquement égal au champ magnétique émis Be. Sur la Figure 2 est représenté un champ magnétique nominal B0 correspondant à la zone ZO de communication dans laquelle un badge ID peut communiquer avec une antenne A et le dispositif d'émission-réception DER. Lorsque le badge ID est en dehors de cette zone ZO (le champ magnétique reçu Br est inférieur au champ magnétique reçu nominal B0), le badge ID ne répond pas aux signaux envoyés par le dispositif d'antennes A ou envoie une réponse radiofréquence RF volontairement erroné. Cela veut dire qu'il se situe à l'extérieur de l'habitacle VH du véhicule. Dans le cas contraire, il répond en émettant un signal radiofréquence RF. On notera que ce champ magnétique nominal B0 est déterminé de manière à éviter les champs magnétiques parasites Bb provenant des perturbations radio comme illustré sur la Figure 2 et sa valeur est supérieure à la valeur des champs magnétiques parasites.

La puissance des signaux basses fréquence BF est définie par le courant alternatif I alimentant le dispositif d'antennes A, cette puissance déterminant le champ magnétique émis Be.

On rappelle que le champ magnétique émis Be du dispositif d'antennes A définit la zone ZO que l'on a appelé également zone de communication.

$$\frac{1}{d^{3}}$$

Dans un mode de réalisation non limitatif, le dispositif d'antennes A est accordé à la fréquence d'émission (la fréquence étant par exemple de 125kHz). Cela permet d'émettre un champ magnétique plus important en amplitude à la fréquence d'émission, et d'avoir un filtre passe-bande FL. Le filtre passe-bande FL permet ainsi de réduire l'amplitude des hannoniques h (sauf pour l'harmonique de rang 1).

En effet, à l'émission, du côté du dispositif d'antennes A, la valeur du courant I circulant dans le dispositif d'antennes A est égale à la somme des harmoniques h qui sont présentes dans la bande passante du filtre compris dans le dispositif d'antennes A. Selon la sélectivité du filtre, on aura toutes les hannoniques si le filtre est large bande tel que représenté en FL1 sur la Figure 3, ou une partie seulement des harmoniques si le filtre est bande étroite tel que représenté en FL2 sur la Figure 3. A l'émission donc, la valeur du champ émis Be est fonction de ce courant Irm avec des harmoniques h.

A la réception, du côté du badge ID, la valeur du courant qui est prise en compte est égale uniquement à l'harmonique h1 de rang 1 appelé fondamental. En effet, le champ magnétique reçu Br correspond au champ magnétique émis Be à la valeur du fondamental uniquement et non à la somme des harmoniques.

Aussi, afin de déterminer précisément le champ magnétique émis Be par le dispositif d'antennes A correspondant au champ magnétique reçu par le badge ID, il est donc nécessaire de mesurer précisément la puissance émise Pe correspondante sur l'harmonique h1 de rang 1. On doit par conséquent effectuer une mesure de courant I de manière à éliminer le plus possible les harmoniques autres que le fondamental h1.

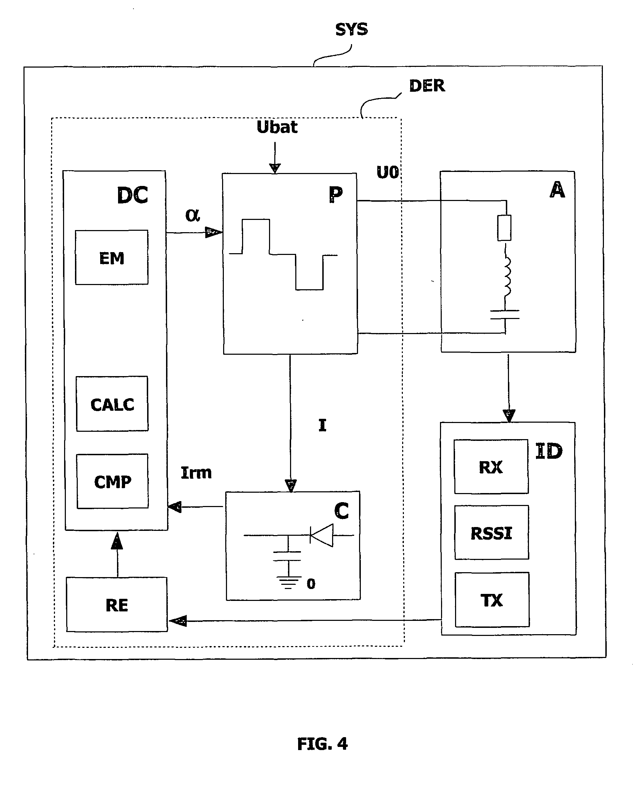

Ceci est effectué au moyen du dispositif d'émission-réception DER de signaux basse fréquence illustré à la Figure 4 qui permet de fournir une tension carré symétrique U0 en entrée du dispositif d'antennes A, cette dernière permettant de supprimer des courants parasites dues aux autres harmoniques comme décrit plus loin.

Le dispositif d'émission-réception DER comporte :

- un dispositif de commande DC,
- un étage de puissance P,
- un étage de mesure de courant C,
- un récepteur RE de signaux pour notamment recevoir une réponse du badge d'identification ID lorsqu'il est à l'intérieur de la zone de communication ZO.

et coopère avec le dispositif d'antenne(s) A et avec le badge d'identification ID, le tout formant un système d'émission-réception SYS.

On notera que selon un mode de réalisation non limitatif, tous les éléments du dispositif d'émission-réception DER se trouvent sur une même carte électronique. Cela permet un dialogue plus rapide et plus fiable entre ces différents éléments. Au contraire, lorsque ces éléments sont séparés, les liaisons de communication les reliant peuvent être plus facilement perturbés et les débits de ces liaisons peuvent être plus faibles.

Le badge d'identification ID étant connu de l'homme du métier, il n'est pas décrit ici.

Les autres éléments sont décrits plus en détail ci-après.

• Le dispositif d'antennes A.

Dans un premier mode de réalisation non limitatif, le dispositif d'antennes A est composé d'un circuit RL. Ce dernier nécessite d'amplifier la tension d'alimentation du dispositif d'antennes pour permettre une émission de champ magnétique approprié.

Dans un deuxième mode de réalisation non limitatif, le dispositif d'antennes A est composé d'un circuit RLC. Ce dernier permet à partir de la tension d'alimentation du dispositif d'antennes A, qui est ici la tension batterie Ubat du véhicule V, d'amplifier directement le courant I circulant dans le dispositif d'antennes A, pour permettre une émission de champ magnétique approprié, sans utiliser d'asservissement en tension. C'est donc une solution plus simple à mettre en oeuvre pour obtenir une amplification. Ce circuit RLC fait également office de filtre passe-bande comme vu précédemment.

• Le dispositif de commande DC comporte notamment :

- un émetteur EM de signaux pour notamment :

  - émettre des signaux de commande en direction de l'étage de puissance P pour fournir la tension d'alimentation Ubat au dispositif d'antennes A,

- un organe de calcul CALC (par exemple un microprocesseur ou un ASIC) permettant notamment d'adapter le rapport cyclique $\alpha 0$ de la tension symétrique U0 appliquée au dispositif d'antennes A.

Dans un mode de réalisation non limitatif, le dispositif de commande DC peut en outre comporter le récepteur RE de signaux pour notamment recevoir une réponse du badge d'identification ID lorsqu'il est à l'intérieur de la zone de communication ZO.

• L'étage de puissance P.

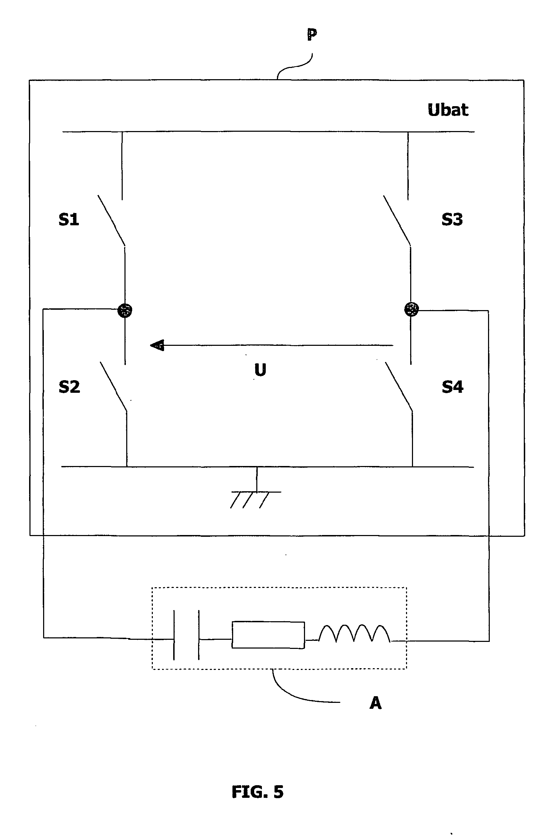

Il fournit la tension carrée symétrique U0 et permet une mesure par la suite du courant I circulant dans le dispositif d'antennes A en diminuant les effets des courants parasites dues aux harmoniques et donc permet par la suite une génération précise et une mesure précise de la puissance émise Pe du dispositif d'antennes A correspondante sur l'harmonique h 1 de rang 1 en supprimant des courants parasites dues aux autres harmoniques. Il est illustré à la Figure 5. Dans un mode de réalisation non limitatif, il fonctionne à pont en H avec commande à pont complet et est commandé par le dispositif de commande DC.

Il comporte en particulier quatre interrupteurs S1 à S4.Ces interrupteurs sont dans un exemple non limitatif des transistors type MOSFET.

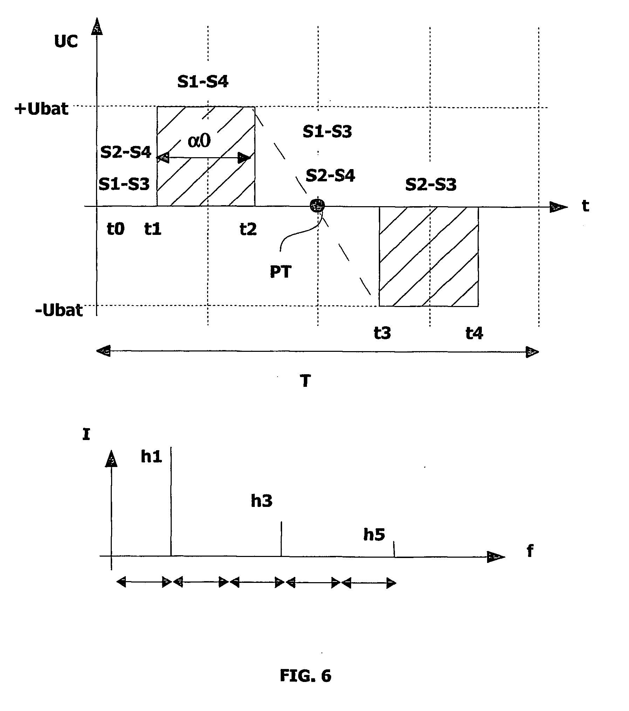

Afin de fournir la tension carrée symétrique U0, l'étage de puissance P fonctionne de la manière suivante tel qu'illustré à la Figure 6.

- Entre les intervalles t0-t1 et t2-t3, soit tous les interrupteurs sont ouverts, soit les interrupteurs S2 et S4 sont fermés, soit les interrupteurs S1 et S3 sont fermés, les autres étant ouverts. La tension U0 est nulle.
- Entre l'intervalle t1-t2, les interrupteurs S1-S4 sont fermés, les autres étant ouverts. La tension U0 est positive.
- Entre l'intervalle t3-t4, les interrupteurs S2-S3 sont fermés, les autres étant ouverts. La tension U0 est négative.

Les deux diagonales du pont S2-S3 et S1-S4 sont commandées par deux signaux de commande retardés l'un par rapport à l'autre d'une demi-période permettant ainsi d'obtenir la symétrie.

On obtient ainsi la tension carré symétrique U0 de rapport cyclique $\alpha0$ voulue. Comme on peut le voir sur la Figure 6, la tension U0 est symétrique par rapport au point PT, et dans ce cas, les harmoniques de rang pair du courant mesuré Irm ont été supprimées.

En effet, lors d'une représentation en fréquence, une harmonique de rang n est représentée par le terme $a_n$ $\cos n\omega t + b_n \sin n\omega t$.

La tension UC est une fonction impaire, soit f(-x) = -f(x), son développement en série de Fourier ne comporte donc que des termes en sinus, les coefficients $a_n$ étant nuls.

Ainsi, en sachant que

$$Cn = \frac{1}{T} \int f(x)\, e^{-jn\omega x}\, dx \quad et \quad Cn = \frac{1}{2}(an - jbn)$$

on obtient

$$Cn = j\,(2E/\pi n).\sin(n\pi\alpha0).\sin(n(\pi/2))$$

et

$$bn = (4E/\pi n).\sin(n\pi\alpha0).\sin(n(\pi/2))$$

avec $\omega = 2\pi/T$, avec T la période et E l'amplitude de la tension d'alimentation Ubat du dispositif d'antennes.

La série de Fourier correspondant au signal tension symétrique U0 est donc égale à :

$$f(x) = \Sigma\,(4E/\pi n).\sin(n\pi\alpha0).\sin(n(\pi/2)).\sin n\omega x,$$

avec n = 1, ...∞,
soit

$$f(x) = \Sigma \; (4E/(\pi(2p+1))).\sin \; ((2p+1) \; \pi\alpha 0).\sin((2p+1)(\pi/2)).\sin \; (2p+1) \; \omega x,$$

avec

p = 0, ...,∞

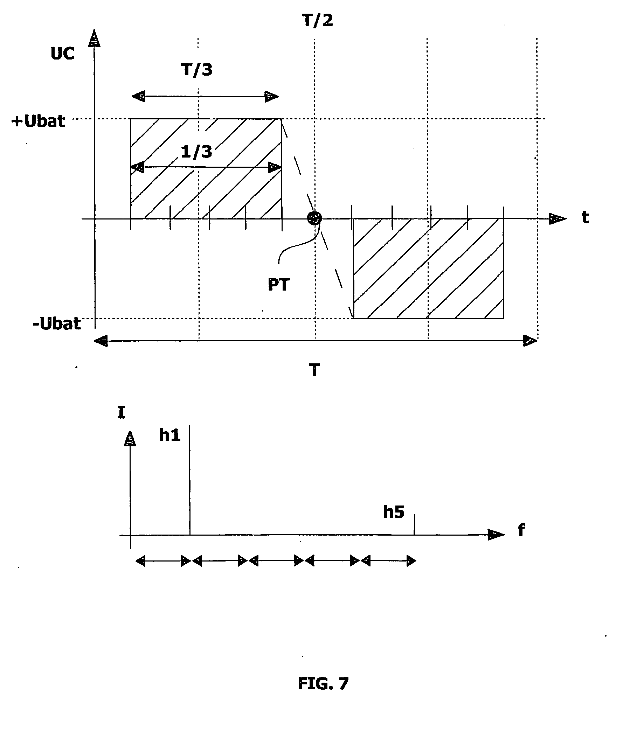

ce qui donne le spectre avec les harmoniques à la Figure 7.

La valeur du fondamental h1 est donnée par :

$$h1 = (4E/\pi) \; .\sin \; \pi\alpha 0. \; \sin \; \omega x$$

ce qui donne le spectre avec les harmoniques à la Figure 6.

Par ailleurs, on notera que le fait d'avoir une tension carrée évite une dissipation d'énergie dans les transistors de l'étage de puissance P. En effet, il existe une consommation d'énergie calorifique uniquement lors des phases de transitions contrairement à une tension type sinusoïdale où la consommation est nettement plus importante. Cet étage de puissance P ne chauffe donc pas trop.

On notera que la valeur du rapport cyclique $\alpha 0$ ajustable permet de régler la valeur de la puissance émise Pe.

Ainsi, la tension symétrique carré U0 permet d'une part de régler la puissance émise Pe à une valeur voulue correspondant à la zone de communication ZO voulue (et donc de générer de façon précise la puissance émise Pe) et d'autre part d'obtenir une mesure précise de la puissance réelle émise Pe correspondant à la puissance reçue effective du badge ID car les harmoniques de rang pair sont supprimées.

Dans une variante non limitative, la tension U0 comporte un rapport cyclique de 1/3 qui correspond à un décalage de $\pi$/3 du signal tension UC. Comme on peut le voir à la Figure 7, dans ce cas, les harmoniques de rang multiple de 3 du courant mesuré Irm ont été supprimées en plus des harmoniques de rang pair ce qui limite considérablement le nombre d'harmonique à l'intérieur de la bande passante du filtre RLC du dispositif d'antennes A. Il ne reste plus que les harmoniques de rang 1 et 5, cette dernière étant négligeable.

• L'étage de mesure de courant C.

Dans un premier mode de réalisation, l'étage ou dispositif de mesure de courant est un détecteur d'amplitude crête. C'est un moyen simple pour mesurer le courant I circulant dans le dispositif d'antennes A. Il permet de mesurer l'amplitude maximale du courant, ce qui suffit car les harmoniques gênantes ont été supprimées par la commande symétrique et le rapport cyclique de 1/3. Ainsi, cette mesure va donner la valeur du fondamental de ce courant I. Il est composé de manière classique d'une diode et d'une capacité tel qu'illustré à la Figure 4.

Il envoie la valeur du courant mesuré Irm à l'organe de calcul CALC du dispositif de commande DC tel qu'illustré à la Figure 4.

Bien entendu d'autres moyens de mesure du courant peuvent être utilisés.

Par exemple, le dispositif de mesure de courant C peut être un dispositif d'échantillonnage numérique ou encore un dispositif qui effectue un redressement de courant puis une moyenne du courant redressé.

Ainsi, grâce au dispositif d'émission-réception DER décrit, on obtient une mesure de courant Irm correspondant à la valeur du fondamental du courant I circulant dans le dispositif d'antennes A. Le courant mesuré Irm est donc dans ce cas représentatif de l'amplitude du fondamental du champ magnétique émis. Par conséquent, on peut en déduire la puissance émise Pe (et donc un champ magnétique émis Be) par le dispositif d'antennes A correspondant précisément à la puissance reçue Pr en sachant que le champ magnétique émis Be est proportionnel au courant mesuré Inn.

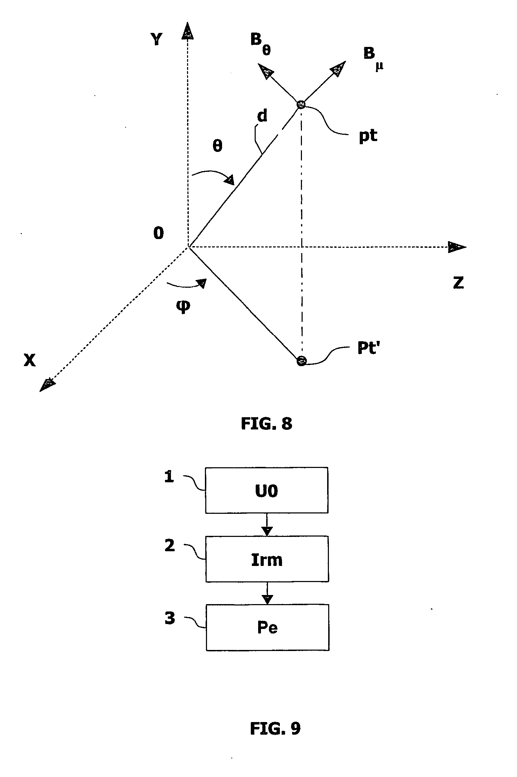

On rappelle que de manière connue de l'homme du métier, un champ magnétique B comporte trois composantes dans un espace orthogonal x, y, z telles qu'illustrées à la Figure 8 qui sont les suivantes.

$$B_\mu = (Ae \; Im/2\pi d^3) * \cos \theta,$$

$$B_\theta = (Ae \; Im/4\pi d^3) * \sin \theta,$$

et

$$B\varphi = 0.$$

avec Ae la surface effective d'une antenne par laquelle s'écoule le champ magnétique B, d la distance qui permet une mesure du champ magnétique B à partir du centre de l'antenne.

On rappelle également que Ae = $N_w * A * \mu_{rod}$ avec $N_w$ le nombre de spires dans l'antenne, A la section transversale de la ferrite des spires, et $\mu_{rod}$ la perméabilité apparente de la ferrite.

On connaît ainsi précisément la puissance Pe à l'émission ce qui va permettre de contrôler la zone de communication ZO entre le dispositif d'antennes A et le badge ID.

On notera que l'on peut utiliser le dispositif d'émission-réception DER décrit pour une application dans laquelle le badge ID est initialisé au préalable avec un seuil S0 fixe correspondant à un champ magnétique reçu fixe (on contrôle la zone de communication ZO à l'émission) ou pour une application dans laquelle le badge ID est initialisé au préalable avec un seuil S0 correspondant à un champ magnétique reçu variable (contrôle de la zone de communication ZO à la réception).

Dans le premier cas (seuil fixe), lorsque le rapport cyclique $\alpha 0$ de la tension symétrique U0 est variable, il suffit d'effectuer un asservissement en courant pour déterminer le rapport cyclique à appliquer par la suite qui va permettre d'obtenir un courant circulant dans le dispositif d'antennes correspondant au seuil fixe S0 du badge ID. Il en est de même avec un rapport cyclique $\alpha 0$ qui est au début égal à 1/3.

Dans le deuxième cas (seuil variable), on fixe le rapport cyclique $\alpha 0$ de manière à obtenir un courant théorique Ith correspondant à la zone de communication nominale. Après chaque mesure du courant réel I circulant dans le dispositif d'antennes correspondant à la zone de communication nominale, il suffit de calculer le seuil S0 à partir de ce courant réel et de l'envoyer au badge ID. Une comparaison s'effectue entre le champ magnétique reçu par le badge ID qui se trouve à une certaine position et le seuil réactualisé. Dans ce deuxième cas également, lorsque le rapport cyclique $\alpha 0$ est égal à 1/3, il suffit de régler le courant théorique Ith correspondant à la zone de communication nominale avec le filtre RLC ou RL du dispositif d'antennes, par exemple en prenant une valeur de résistance R adéquate. Puis, le reste (mesure du courant réel, envoi du seuil correspondant au badge ID, comparaison avec le seuil réactualisé) s'effectue comme décrit précédemment.

Ainsi, la mesure précise du courant circulant dans le dispositif d'antennes A permet d'obtenir une mesure précise de la puissance réelle émise Pe (qui prend en compte les possibles variations de son impédance Z) et de régler le dispositif d'antennes sur une puissance émise Pe correspondant exactement au seuil S0 du badge ID lorsqu'il se trouve à la limite de la zone de communication ZO. Le dispositif d'antennes A et le badge ID peuvent ainsi communiquer sans risque d'erreur. Et dans le cadre d'une application tel qu'un système mains libres, la détection du badge ID peut s'effectuer sans erreurs.

On notera que la Figure 8 illustre le procédé mis en oeuvre par le dispositif d'émission-réception DER, à savoir :

- envoyer un signal tension symétrique U0 en entrée du dispositif d'antennes A pour lui fournir un courant permettant de générer le champ magnétique émis, et
- mesurer le courant circulant dans le dispositif d'antennes A.

On notera que les exemples ont été pris avec un dispositif d'antennes A émettant des signaux basse fréquence et un objet d'identification ID émettant des signaux radiofréquence, mais bien entendu d'autres exemples peuvent être pris avec des émissions de signaux à d'autres fréquences.

Ainsi l'invention présente les avantages suivants :

- elle permet de déterminer précisément la valeur de la puissance émise et donc la valeur du champ magnétique émis correspondant au champ magnétique reçu,
- cette détermination s'effectue simplement au moyen d'une mesure de courant et évite ainsi un asservissement en tension complexe.

**Revendications**

**1.** Système d'accès mains libres d'un véhicule automobile comprenant un dispositif d'émission-réception (DER) de signaux, un objet d'identification (ID) apte à être porté par un utilisateur du véhicule, ledit dispositif d'émission (DER) étant apte à contrôler un dispositif d'antenne(s) (A) afin d'émettre un champ magnétique (Be) en direction de l'objet d'identification, **caractérisé en ce que** le dispositif d'émission (DER) comporte pour l'émission :

- un étage de puissance (P) pour envoyer un signal tension carré symétrique (U0) en entrée du dispositif d'antenne(s) (A) pour lui fournir un courant permettant de générer le champ magnétique émis (Be), et
- un étage de mesure de courant (C) pour mesurer le courant (I) circulant dans le dispositif d'antenne(s) (A).

**2.** Système d'accès mains libres selon la revendication 1, **caractérisé en ce que** le signal tension (U0) comporte un rapport cyclique de 1/3.

**3.** Système d'accès mains libres selon l'une des revendication 1 ou 2, **caractérisé en ce que** l'étage de puissance (P) est avec commande à pont complet.

**4.** Système d'accès mains libres selon l'une quelconque des revendications précédentes, **caractérisé en ce que** l'étage de mesure (C) est un détecteur crête (C).

**5.** Système d'accès mains libres selon l'une quelconque des revendications précédentes, **caractérisé en ce que** le dispositif d'antenne(s) (A) est un circuit RLC.

**Claims**

**1.** Hands-free access system of a motor vehicle comprising a signals transmission-reception device (DER), an identification object (ID) able to be worn by a user of the vehicle, said transmission device (DER) being able to control an antenna(s) device (A) so as to emit a magnetic field (Be) towards the identification object, **characterized in that** the transmission device (TRD) comprises for transmission:

- a power stage (P) for sending a symmetric square voltage signal (U0) as input to the antenna(s) device (A) so as to provide it with a current making it possible to generate the magnetic field emitted (Be), and
- a current measurement stage (C) for measuring the current (I) flowing in the antenna(s) device (A).

**2.** Hands-free access system according to Claim 1, **characterized in that** the voltage signal (U0) comprises a duty ratio of 1/3.

**3.** Hands-free access system according to one of Claims 1 or 2, **characterized in that** the power stage (P) is with complete-bridge control.

**4.** Hands-free access system according to any one of the preceding claims, **characterized in that** the measurement stage (C) is a peak detector (C).

**5.** Hands-free access system according to any one of the preceding claims, **characterized in that** the antenna(s) device (A) is an RLC circuit.

**Patentansprüche**

**1.** Berührungsloses Zugangssystem eines Kraftfahrzeugs, das eine Sende-Empfangs-Vorrichtung (DER) von Signalen und einen Identifikationsgegenstand (ID) enthält, der von einem Nutzer des Fahrzeugs getragen werden kann, wobei die Sendevorrichtung (DER) eine Antennenvorrichtung (A) steuern kann, um ein Magnetfeld (Be) in Richtung des Identifikationsgegenstands zu senden, **dadurch gekennzeichnet, dass** die Sendevorrichtung (DER) zum Senden aufweist:

- eine Leistungsstufe (P), um ein symmetrisches Spannungsrechtecksignal (U0) an den Eingang der Antennenvorrichtung (A) zu schicken, um ihr einen Strom zu liefern, der es ermöglicht, das gesendete Magnetfeld (Be) zu erzeugen, und
- eine Strommessstufe (C), um den Strom (I) zu messen, der in der Antennenvorrichtung (A) fließt.

**2.** Berührungsloses Zugangssystem nach Anspruch 1, **dadurch gekennzeichnet, dass** das Spannungssignal (U0) ein zyklisches Verhältnis von 1/3 aufweist.

**3.** Berührungsloses Zugangssystem nach einem der Ansprüche 1 oder 2, **dadurch gekennzeichnet, dass** die Leistungsstufe (P) eine Steuerung mit vollständiger Brückenschaltung hat.

4. Berührungsloses Zugangssystem nach einem der vorhergehenden Ansprüche, **dadurch gekennzeichnet, dass** die Messstufe (C) ein Spitzendetektor (C) ist.

5. Berührungsloses Zugangssystem nach einem der vorhergehenden Ansprüche, **dadurch gekennzeichnet, dass** die Antennenvorrichtung (A) eine RLC-Schaltung ist.

FIG. 1

**·FIG. 2**

**FIG. 3**

**FIG. 4**

**FIG. 5**

**FIG. 6**

**FIG. 7**

**FIG. 8**

**FIG. 9**